(19) **Europäisches Patentamt / European Patent Office / Office européen des brevets**

(11) **EP 4 664 804 A1**

(12) **EUROPEAN PATENT APPLICATION**
published in accordance with Art. 153(4) EPC

(43) Date of publication:
**17.12.2025 Bulletin 2025/51**

(21) Application number: **24752723.7**

(22) Date of filing: **29.01.2024**

(51) International Patent Classification (IPC):
***H04L 1/1812*** (2023.01)

(52) Cooperative Patent Classification (CPC):
**H04L 1/1812; H04L 5/00; H04W 36/04**

(86) International application number:
**PCT/CN2024/074436**

(87) International publication number:
**WO 2024/164867 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 CN 202310144468**

(71) Applicant: **Datang Mobile Communications Equipment Co., Ltd.**
**Beijing 100085 (CN)**

(72) Inventors:
• **WANG, Junwei**
  **Beijing 100085 (CN)**
• **ZHU, Min**
  **Beijing 100085 (CN)**
• **GAO, Xuejuan**
  **Beijing 100085 (CN)**
• **SI, Qianqian**
  **Beijing 100085 (CN)**

(74) Representative: **Studio Torta S.p.A.**
**Via Viotti, 9**
**10121 Torino (IT)**

(54) **METHOD AND APPARATUS FOR DETERMINING DYNAMIC HARQ-ACK CODEBOOK, AND COMMUNICATION DEVICE**

(57) This disclosure provides a method and apparatus for determining a dynamic HARQ-ACK codebook, and a communication device, and relates to the field of communication technologies. The method for determining a dynamic HARQ-ACK codebook is performed by the communication device and comprises: determining dynamic HARQ-ACK codebook information based on a first index; wherein the first index comprises an index of a cell set or an index of a reference serving cell; and reference serving cells correspond to cell sets in a one-to-one relationship, and the cell set comprises at least two serving cells.

Determining dynamic HARQ-ACK
codebook information based on a first index    — S501

Fig. 5

**Description**

**CROSS-REFERENCE TO RELATED APPLICATION**

The present application claims a priority to the Chinese patent application No. 202310144468.7, titled as "method and apparatus for determining dynamic HARQ-ACK codebook, and communication device", and filed with the China National Intellectual Property Administration on February 10, 2023, the disclosure of which is incorporated herein by reference in its entirety.

**TECHNICAL FIELD**

The present disclosure relates to the field of communication technologies, in particular to a method and apparatus for determining a dynamic HARQ-ACK codebook, and a communication device.

**BACKGROUND**

In the carrier aggregation (CA) enhancement project of new radio (NR) release 18 (R18), it is supported that one piece of downlink control information (DCI) schedules physical downlink shared channels (PDSCHs) in a plurality of cells (one piece of DCI can schedule PDSCHs of up to 4 downlink carriers). In order to ensure the quality and reliability of PDSCH transmission, it is necessary to support a hybrid automatic repeat request (HARQ) procedure, in which one option is that a terminal feeds back a Type-2 (dynamic) hybrid automatic repeat request acknowledgement (HARQ-ACK) codebook. It is generally considered that when a single piece of DCI schedules the PDSCHs of a plurality of cells, the terminal generates a plurality pieces of negative acknowledgement (NACK)/acknowledgement (ACK) information every time receiving one scheduling signaling, and the different pieces of ACK/NACK information come from the decoding results of the PDSCHs of different cells, which is different from the related standard technical process. Therefore, how to construct the Type-2 HARQ-ACK codebook for multi-cell scheduling is an issue to be studied.

**SUMMARY**

Embodiments of the present disclosure provide a method and apparatus for determining a dynamic hybrid automatic repeat request acknowledgement (HARQ-ACK) codebook, and a communication device, so as to ensure the accurate generation of a dynamic HARQ-ACK codebook for multi-cell scheduling.
In order to solve the above technical problem, an embodiment of the present disclosure provides a method for determining a dynamic hybrid automatic repeat request acknowledgement (HARQ-ACK) codebook, which is performed by a communication device, the method including:

determining dynamic HARQ-ACK codebook information based on a first index;
wherein the first index includes an index of a cell set or an index of a reference serving cell; and
wherein the cell set includes at least two serving cells, the reference serving cell correspond to one cell set.

Optionally, the determining the dynamic HARQ-ACK codebook information based on the first index includes:

determining the first index indicated by scheduling signaling corresponding to a physical downlink control channel (PDCCH) monitoring occasion (MO); and
determining HARQ-ACK codebook information corresponding to the scheduling signaling based on the first index;
wherein the scheduling signaling is used for scheduling at least one cell in the cell set.

Optionally, the determining the HARQ-ACK codebook information corresponding to the scheduling signaling based on the first index includes:

when a first condition is satisfied, determining the HARQ-ACK codebook information corresponding to the scheduling signaling based on scheduled cells in the cell set indicated by the first index;
wherein the first condition includes: at least one of the cells scheduled by the scheduling signaling has an HARQ procedure with enabled HARQ-ACK feedback.

Optionally, the determining the HARQ-ACK codebook information corresponding to the scheduling signaling based on the scheduled cells in the cell set indicated by the first index includes:

determining the HARQ-ACK codebook information corresponding to the scheduling signaling according to a first order of indexes of the scheduled cells in the cell set indicated by the first index;
wherein the first order includes an ascending order or a descending order.

Optionally, the determining the HARQ-ACK codebook information corresponding to the scheduling signaling includes:

determining a quantity of bits of HARQ-ACK corresponding to the scheduled cell according to a parameter configuration of a currently active bandwidth part (BWP) of the scheduled cell;
determining HARQ-ACK feedback information corresponding to the scheduled cell according to the quantity of bits of the HARQ-ACK corresponding to the scheduled cell; and
determining the HARQ-ACK codebook information corresponding to the scheduling signaling according to the HARQ-ACK feedback information corresponding to the scheduled cell.

Optionally, the quantity of bits of the HARQ-ACK codebook information corresponding to the scheduling signaling is Y, Y being an integer greater than or equal to 1; the method further including:

when a terminal is configured with one cell set, determining a maximum quantity of bits to be fed back corresponding to the cell set that corresponds to the first index indicated by the scheduling signaling as Y; or
when the terminal is configured with at least two cell sets, determining a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

Optionally, the method further includes:

when the scheduling signaling corresponding to the first index is before a first change, ignoring the HARQ-ACK codebook information of the scheduling signaling in a case where at least a second condition is satisfied;
the first change includes: a change of an active downlink (DL) BWP;
wherein the second condition includes at least one of:

the cell set scheduled by the scheduling signaling is the same as a cell set scheduled by scheduling signaling triggering the first change;
a cell where the first change occurs is one cell in the cell set corresponding to the first index;
the cells scheduled by the scheduling signaling include the cell where the first change occurs;
a DL BWP change occurs in all cells of the cell set corresponding to the first index;
the cell where the scheduling signaling is sent is the same as the cell where the first change occurs;
the first change causes a quantity of bits of the HARQ-ACK codebook information corresponding to the scheduling signaling to vary; or
the first change causes a PDSCH candidate reception position corresponding to the scheduling signaling to vary.

An embodiment of the present disclosure further provides a communication device, which is a terminal or a network device, the communication device including a memory, a transceiver and a processor:
the memory is configured to store a computer program; the transceiver is configured to transmit and receive data under the control of the processor; and the processor is configured to read the computer program in the memory and perform the following steps:

determining dynamic hybrid automatic repeat request acknowledgement (HARQ-ACK) codebook information based on a first index;
wherein the first index includes an index of a cell set or an index of a reference serving cell; and
wherein the cell set includes at least two serving cells, the reference serving cell correspond to one cell set.

Optionally, the processor is configured to read the computer program in the memory and perform the following steps:

determining the first index indicated by scheduling signaling corresponding to a physical downlink control channel (PDCCH) monitoring occasion (MO); and
determining HARQ-ACK codebook information corresponding to the scheduling signaling based on the first index;

wherein the scheduling signaling is used for scheduling at least one cell in the cell set.

Optionally, the processor is configured to read the computer program in the memory and perform the following step:

when a first condition is satisfied, determining the HARQ-ACK codebook information corresponding to the scheduling signaling based on scheduled cells in the cell set indicated by the first index;
wherein the first condition includes: at least one of the cells scheduled by the scheduling signaling has an HARQ procedure with enabled HARQ-ACK feedback.

Optionally, the processor is configured to read the computer program in the memory and perform the following step:

determining the HARQ-ACK codebook information corresponding to the scheduling signaling according to a first order of indexes of the scheduled cells in the cell set indicated by the first index;
wherein the first order includes an ascending order or a descending order.

Optionally, the processor is configured to read the computer program in the memory and perform the following steps:

determining a quantity of bits of HARQ-ACK corresponding to the scheduled cell according to a parameter configuration of a currently active bandwidth part (BWP) of the scheduled cell;
determining HARQ-ACK feedback information corresponding to the scheduled cell according to the quantity of bits of the HARQ-ACK corresponding to the scheduled cell; and
determining the HARQ-ACK codebook information corresponding to the scheduling signaling according to the HARQ-ACK feedback information corresponding to the scheduled cell.

Optionally, the quantity of bits of the HARQ-ACK codebook information corresponding to the scheduling signaling is Y, Y being an integer greater than or equal to 1; and the processor is configured to read the computer program in the memory and perform the following steps:

when the terminal is configured with one cell set, determining a maximum quantity of bits to be fed back corresponding to the cell set that corresponds to the first index indicated by the scheduling signaling as Y; or
when the terminal is configured with at least two cell sets, determining a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

Optionally, the processor is configured to read the computer program in the memory and perform the following step:

when the scheduling signaling corresponding to the first index is before a first change, ignoring the HARQ-ACK codebook information of the scheduling signaling in a case where at least a second condition is satisfied;
the first change includes: a change of an active downlink (DL) BWP;
wherein the second condition includes at least one of:

the cell set scheduled by the scheduling signaling is the same as a cell set scheduled by scheduling signaling triggering the first change;
a cell where the first change occurs is one cell in the cell set corresponding to the first index;
the cells scheduled by the scheduling signaling include the cell where the first change occurs;
a DL BWP change occurs in all cells of the cell set corresponding to the first index;
the cell where the scheduling signaling is sent is the same as the cell where the first change occurs;
the first change causes a quantity of bits of the HARQ-ACK codebook information corresponding to the scheduling signaling to vary; or
the first change causes a PDSCH candidate reception position corresponding to the scheduling signaling to vary.

An embodiment of the present disclosure further provides an apparatus for determining a dynamic hybrid automatic repeat request acknowledgement (HARQ-ACK) codebook, which is applied to a terminal or a network device, the apparatus including:

a first determination unit configured to determine dynamic HARQ-ACK codebook information based on a first index;
wherein the first index includes an index of a cell set or an index of a reference serving cell; and
wherein the cell set includes at least two serving cells, the reference serving cell correspond to one cell set.

An embodiment of the present disclosure further provides a processor-readable storage medium storing a computer program, wherein the computer program is configured to cause a processor to perform the aforementioned method.

The present disclosure has the following advantageous effects.

The above solutions adopt the index of the cell set or the index of the reference serving cell to determine the dynamic HARQ codebook information, while further considering the influence of the BWP change/the HARQ enablement indicator on the generation of the HARQ codebook information, so as to ensure the accurate generation of the dynamic HARQ-ACK codebook for multi-cell scheduling, and ensure the communication reliability.

## BRIEF DESCRIPTION OF THE DRAWINGS

In order to explain the technical solutions in the embodiments of the present disclosure or in the related art more clearly, the drawings to be used in the description of the embodiments or the related art will be briefly introduced below. Obviously, the drawings involved in the following description merely illustrate some embodiments of the present disclosure, and those of ordinary skill in the art can obtain other drawings from these drawing without paying any creative effort.

Fig. 1 illustrates a structural diagram of a network system to which embodiments of the present disclosure are applicable.

Fig. 2 illustrates a schematic diagram of a scheduling corresponding to a dynamic codebook in a single carrier scenario.

Fig. 3 illustrates another schematic diagram of a scheduling corresponding to a dynamic codebook in a single carrier scenario.

Fig. 4 illustrates a schematic diagram of the influence of a BWP change on the construction of a Type-2 HARQ codebook.

Fig. 5 illustrates a flowchart of a method for determining a dynamic HARQ-ACK codebook according to an embodiment of the present disclosure.

Fig. 6 illustrates a first schematic diagram of the mutual influence between BWP changes.

Fig. 7 illustrates a second schematic diagram of the mutual influence between BWP changes.

Fig. 8 illustrates a third schematic diagram of the mutual influence between BWP changes.

Fig. 9 illustrates a modular diagram of an apparatus for determining a dynamic HARQ-ACK codebook according to an embodiment of the present disclosure.

Fig. 10 illustrates a structural diagram of a communication device according to an embodiment of the present disclosure.

## DETAILED DESCRIPTION

The technical solutions in the embodiments of the present disclosure will be clearly and thoroughly described below with reference to the drawings for the embodiments of the present disclosure. Obviously, those described are only parts, rather than all, of the embodiments of the present disclosure. Based on the embodiments of the present disclosure, any other embodiment obtained by those of ordinary skill in the art without paying any creative effort should fall within the protection scope of the present disclosure.

The terms such as "first" and "second" in the specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "include", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, system, product, or device.

In the embodiments of the present disclosure, the term "and/or" is only an association relationship that describes the associated objects, indicating that there may be three relationships. For example, A and/or B may mean that A exists alone, A and B both exist, and B exists alone. The character "/" generally indicates that the contextually associated objects are in an "or" relationship. In the embodiments of the present disclosure, the term "a plurality of" refers to two or more, and other quantifiers are similar.

In the embodiments of the present disclosure, the phase such as "exemplary" or "for example" is used to indicate an example, an illustration, or an explanation. Any embodiment or design solution described with "exemplary" or "for example" in the embodiments of the present disclosure should not be construed as more preferable or more advantageous than any other embodiment or design solution. To be exact, the use of the word such as "exemplary" or "for example" is intended to present related concepts in a specific manner.

The embodiments of the present disclosure are introduced below with reference to the drawings. A method and apparatus for determining a dynamic HARQ-ACK codebook, and a communication device according to the embodiments of the present disclosure are applicable to a radio communication system, which may be a system adopting a 5th Generation (5G) mobile communication technology (hereinafter collectively referred to as a 5G system), and those skilled in the art can understand that a 5G NR system is only an example rather than a limitation.

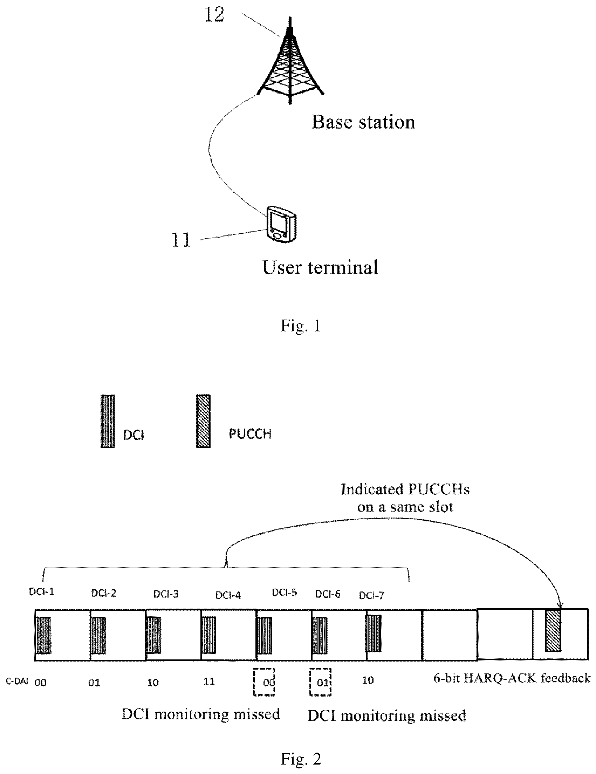

Referring to Fig. 1, which illustrates a structural diagram of a network system to which an embodiment of the present disclosure can be applied. As illustrated in Fig. 1, the network system includes a user terminal 11 and a base station 12, wherein the user terminal 11 may be user equipment (UE), e.g., a terminal-side device such as a mobile phone, a tablet personal computer, a laptop computer, a personal digital assistant (PDA), a mobile Internet device (MID), a wearable device, or the like. It should be noted that the specific type of the user terminal 11 is not limited in the embodiment of the present disclosure. The base station 12 may be a base station for 5G and later releases (e.g., gNB, 5G NR NB), or a base station in other communication systems, or referred to as Node B. It should be noted that in the embodiments of the present disclosure, only a 5G base station is taken as an example, but the specific type of the base station 12 is not limited.

Firstly, based on the technical solutions of the present disclosure, some technical terms that may be involved are introduced.

1. HARQ-ACK dynamic codebook (Type-2) mechanism.

In related 5G systems, the generation mechanism of a dynamic HARQ-ACK codebook is supported. The principle is that when scheduling signaling DCI is sent, a downlink assignment index (DAI) indicator is added, and a terminal side calculates the quantity of the DCI actually sent by the base station and the quantity of the PDSCHs scheduled by the DCI according to a DAI count, so as to determine the quantity of the PDSCHs for which feedback information is to be transmitted in the HARQ-ACK codebook.

The process is described based on a single-cell scenario (only C-DAI is utilized).

As illustrated in Fig. 2, the base station schedules seven PDSCHs to the terminal, wherein the scheduling information indicates that the positions of PUCCH feedback slots are on a same slot, and it is desired to feed back the HARQ-ACK information corresponding to the seven PDSCHs (if each PDSCH corresponds to one bit of HARQ-ACK feedback, the HARQ-ACK codebook has 7 bits). Due to the uncertainty of the wireless channel, DCI-5 and DCI-6 are missed for monitoring at the terminal side. When the terminal receives C-DAI=3 (the corresponding bit information indicates 10) in the scheduling signaling DCI-7, and C-DAI=4 in the last received DCI-4, the terminal may learn that two DCIs are lost between DCI-4 and DCI-7 according to the values of the DAI. Thus, the terminal can still calculate to determine that the total quantity of the PDSCHs to which the HARQ-ACK feedback corresponds is 7.

In the related art, it is assumed that the quantity of DCIs continuously missed for monitoring by the terminal does not exceed 3, so the DAI in the example is indicated with 2-bit information, which is called counter DAI (C-DAI) here.

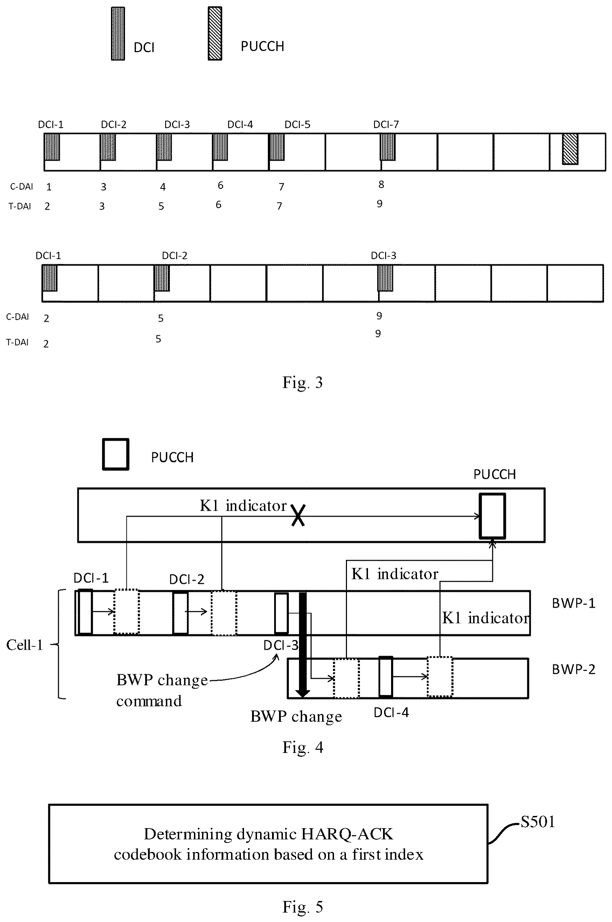

In addition, in order to support the multi-carrier HARQ feedback, total DAI (T-DAI) is introduced on the basis of the C-DAI, and indicated with 2-bit information. The C-DAI and the T-DAI are jointly used to determine the quantity of PDSCHs to which the HARQ feedback corresponds, thereby determining a length of the HARQ-ACK codebook, as illustrated in Fig. 3.

For the convenience of explanation, the value of the C-DAI/T-DAI is expressed as acyclic decimal. In which, the C-DAI represents a serial number of the currently scheduled PDSCH. For example, C-DAI=1 indicates a first DCI scheduling. The T-DAI represents a total quantity of PDSCHs scheduled at corresponding DCI scheduling moment. For example, T-DAI=2 means that 2 PDSCHs are scheduled in total. For another example, T-DAI=9 means that 9 PDSCHs are scheduled in total. At the terminal side, the sequence for generating the HARQ-ACK codebook according to the C-DAI/T-DAI technical rules is as follows:

monitoring occasion MO-1: DCI-1 of cell-1 is calculated first, and then DCI-2 of cell-2 is calculated;

monitoring occasion MO-2: DCI-3 of cell-1 is calculated, because there is no DCI in cell-2 and it is unnecessary to calculate the DCI of cell-2;

monitoring occasion MO-3: DCI-4 of cell-1 is calculated first, and then DCI-5 of cell-2 is calculated;

monitoring occasion MO-4: DCI-6 of cell-1 is calculated, because there is no DCI in cell-2 and it is unnecessary to calculate the DCI of cell-2;

monitoring occasion MO-5: DCI-7 of cell-1 is calculated, because there is no DCI in cell-2 and it is unnecessary to calculate the DCI of cell-2; and

monitoring occasion MO-6: DCI-8 of cell-1 is calculated first, and then DCI-9 of cell-2 is calculated.

2. Influence of a Bandwidth Part (BWP) change on the construction of a Type-2 HARQ codebook.

In order to meet the flexible requirements for communication bandwidth by the terminal (e.g., a communication bandwidth of 5 MHz is required at timing t1, and a communication bandwidth of 10 MHz is required at timing t2, with a duration of tens or hundreds of milliseconds between t1 and t2), the concept of BWP is put forward based on carriers, wherein one carrier may be configured with a plurality of BWPs (all of the BWPs are within a bandwidth range of the carrier), and the base station and the terminal dynamically select one BWP according to the communication bandwidth requirements and perform communications on the selected BWP.

The base station may simultaneously indicate a BWP change command along with the scheduling data through scheduling signaling. In this case, the construction of the Type-2 HARQ-ACK codebook is influenced in the following rules.

For a serving cell c, when a physical downlink control channel (PDCCH) monitoring occasion (MO) is before the BWP change, and the PDCCH MO does not trigger any BWP change, the UE will skip the carrier c when constructing an HARQ-ACK codebook (i.e., a process of generating an HARQ-ACK codebook triggered by the scheduling signaling on the MO is ignored).

The BWP change includes: a BWP change occurring in the serving cell c or an uplink (UL) BWP change occurring in a primary cell (PCELL).

As illustrated in Fig. 4, the terminal receives four DCI on a same physical uplink control channel (PUCCH) feedback slot indicated by the base station, wherein

the scheduling data of DCI-1/DCI-2 all occurs on BWP-1;

DCI-3 is a BWP change command (the scheduling data is a change from BWP1 to BWP2); and

the scheduling data of DCI-4 all occurs on BWP-2.

According to the above rules, the terminal ignores a process of generating an HARQ-ACK triggered by the scheduling signaling DCI-1 and DCI-2, and only uses an HARQ-ACK triggered by the DCI-3/DCI-4 scheduling signaling to construct a codebook.

Remarks: the PUCCH slots indicated before and after the BWP change may not be a same slot, and they are drawn in one slot in the figures only for the convenience of description but are not limited in actual implementations.

It should be noted that in the above BWP change, in addition to a BWP change indicator generated by the scheduling signaling DCI, a radio resource control (RRC) signaling indicator, a media access control control element (MAC-CE), and/or a BWP change timer will also lead to the BWP change.

3. Problems to be solved in multi-cell scheduling made by a single DCI.

Problem 1: when a plurality of cells are configured and the DCI schedules the PDSCHs of the plurality of cells, what are the dimension and order of a codebook construction (i.e., how to traverse all relevant multi-cell configurations)?

During a conventional Type-2 construction of the HARQ codebook, a construction order is determined based on {serving cell, PDCCH MO}-pairs as follows:

in a same PDCCH MO, in an ascending order of the indexes of the serving cells (e.g., HARQ codebook is constructed for cell-0 first, and then for cell-1); and

in different PDCCH MOs, in a temporal order of the MOs (i.e., HARQ codebook is constructed for an earlier MO first, and then the later ones).

However, during the multi-cell scheduling, how to cycle through the serving cells is a problem to be clarified, because the PDSCHs scheduled by one DCI concern a plurality of serving cells, that is, one DCI schedules the PDSCHs of a plurality of cells.

Problem 2: after the DCI schedules the PDSCHs of a plurality of cells, if there is a BWP change indicator (including multi-cell PDSCH scheduling trigger, single-cell PDSCH scheduling trigger, and RRC/MAC-CE/BWP timer trigger), how to construct an HARQ-ACK codebook?

The related art only defines the scenarios where both DCI-1 and DCI-2 are used for single-cell scheduling, without giving a specific method for the case where one of the scheduling signaling is multi-cell scheduling DCI.

Based on the above analyses, the embodiments of the present disclosure provide a method and apparatus for determining a dynamic HARQ-ACK codebook, and a communication device, so as to ensure the accurate generation of the dynamic HARQ-ACK codebook for multi-cell scheduling.

The method and the apparatus are based on the same innovative concept. Since the method and the apparatus adopt similar principles to solve the above problem, for the implementation of the apparatus, reference may made to the method embodiment, and vice versa, and the repeated contents will be omitted.

As illustrated in Fig. 5, an embodiment of the present disclosure provides a method for determining a dynamic HARQ-ACK codebook, which is performed by a communication device, the method including:

step S501: determining dynamic HARQ-ACK codebook information based on a first index;
wherein the first index includes an index of a cell set or an index of a reference serving cell; and
reference serving cells correspond to cell sets in a one-to-one relationship, and the cell set includes at least two serving cells.

It should be noted that for the multi-cell scheduling, the embodiment of the present disclosure may adopt the cell set scheduling, wherein a cell set may be identified with an index thereof, or identified with an index of a reference serving cell by providing one reference serving cell for each cell set; the reference serving cell is configured by higher layer signaling or judged according to scheduling signaling (e.g., according to the scheduling signaling, it is determined that the reference serving cell is a cell corresponding to DAI or a cell that sends the scheduling signaling).

It can be understood that cell scheduling is made based on the cell sets in the embodiment of the present disclosure, and the dynamic HARQ-ACK codebook information is also determined based on the scheduled cell set.

It should also be noted here that when a network device is configured with one cell set, only C-DAI needs to be carried in the scheduling signaling during the multi-cell scheduling; and when the network device is configured with two or more cell sets, both C-DAI and T-DAI should be carried in the scheduling signaling during the multi-cell scheduling.

Optionally, an implementation of step S501 in the embodiment of the present disclosure includes:

determining the first index indicated by scheduling signaling corresponding to a physical downlink control channel (PDCCH) monitoring occasion (MO); and
determining HARQ-ACK codebook information corresponding to the scheduling signaling based on the first index;
wherein the scheduling signaling is used for scheduling at least one cell in the cell set.

It should be noted that the scheduling signaling in the embodiment of the present disclosure refers to scheduling signaling for scheduling a cell set. No matter how many cells in the cell set are actually scheduled by the scheduling signaling, it is regarded as the scheduling of the cell set, so the scheduling signaling belongs to multi-cell scheduling signaling. Optionally, the scheduling signaling is DCI.

It should be noted that each PDCCH MO may correspond to one or more scheduling signaling, and each scheduling signaling may correspond to one first index, that is, one scheduling signaling schedules one cell set.

During implementation, generally, the indexes of all cell sets configured by higher layer signaling are traversed for each PDCCH MO, to determine the actually scheduled cell set. When there are a plurality of PDCCH MOs, the above process of traversing the indexes of the cell sets will be performed for a plurality of rounds.

Optionally, an optional implementation of the determining the HARQ-ACK codebook information corresponding to the scheduling signaling based on the first index in the embodiment of the present disclosure includes:

when a first condition is satisfied, determining the HARQ-ACK codebook information corresponding to the scheduling signaling based on scheduled cells in the cell set indicated by the first index;
wherein the first condition includes: at least one of the cells scheduled by the scheduling signaling has an HARQ procedure with enabled HARQ-ACK feedback.

It should be noted that after each scheduled cell set is determined based on the first index, it is necessary to determine the HARQ-ACK codebook information for each scheduling signaling satisfying the first condition, that is, the HARQ-ACK codebook information corresponding to one PDCCH MO is jointly composed of HARQ-ACK codebook information that corresponds to all the scheduling signaling satisfying the first condition corresponding to the PDCCH MO.

For example, when at least one of the cells scheduled by scheduling signaling X has an HARQ procedure with enabled HARQ-ACK feedback, it indicates that HARQ-ACK feedback is required for the scheduling signaling X. When the HARQ-ACK feedback is disabled in the HARQ procedure of each cell scheduled by the scheduling signaling X, the terminal does not feed back the HARQ-ACK information corresponding to the scheduling signaling X.

Optionally, the quantity of bits of the HARQ-ACK codebook information corresponding to each scheduling signaling is Y, Y being an integer greater than or equal to 1. Specifically, the Y bits are determined based on at least one of the following A11 and A12.

A11: when a terminal is configured with at least two cell sets, it is determined that a maximum quantity of bits to be fed back corresponding to a first cell set is Y, wherein the first cell set is one cell set among the at least two cell sets that corresponds to a maximum value of the maximum quantities of bits to be fed back corresponding to the at least two cell sets.

For example, when the terminal is configured with a cell set A, a cell set B and a cell set C, wherein a maximum quantity of bits to be fed back corresponding to the cell set A is 5 bits, a maximum quantity of bits to be fed back corresponding to the cell set B is 6 bits, and a maximum quantity of bits to be fed back corresponding to the cell set C is 8 bits, the scheduling signaling for any one of the cell set A, the cell set B and the cell set C is determined to be corresponding to the HARQ-ACK codebook information of 8 bits.

A12: when the terminal is configured with one cell set, it is determined that a maximum quantity of bits to be fed back corresponding to the cell set which corresponds to the first index indicated by the scheduling signaling is Y.

That is, when the terminal is only configured with one cell set, the quantity of bits of the HARQ-ACK codebook information to be fed back for the scheduling of the cell set by the scheduling signaling is equal to a maximum quantity of bits to be fed back corresponding to the cell set.

For example, when the terminal is only configured with a cell set D and a maximum quantity of bits to be fed back corresponding to the cell set D is 5 bits, it is determined that the scheduling signaling of the cell set D corresponds to the HARQ-ACK codebook information of 5 bits.

It should also be noted that the maximum quantity of bits to be fed back corresponding to each cell set is stipulated by a protocol or configured by the network device.

Optionally, an implementation of the determining the HARQ-ACK codebook information corresponding to the scheduling signaling based on the scheduled cells in the cell set indicated by the first index in the embodiment of the present disclosure includes:

determining the HARQ-ACK codebook information corresponding to the scheduling signaling according to a first order of indexes of the scheduled cells in the cell set indicated by the first index;
wherein the first order includes an ascending order or a descending order.

That is, the HARQ-ACK codebook information corresponding to each scheduling signaling is obtained based on the ascending order or the descending order of the indexes of the scheduled cells.

Further optionally, an optional implementation of the determining the HARQ-ACK codebook information corresponding to the scheduling signaling includes:

determining a quantity of bits of HARQ-ACK corresponding to the scheduled cell according to a parameter configuration of a currently active bandwidth part (BWP) of the scheduled cell;
determining HARQ-ACK feedback information corresponding to the scheduled cell according to the quantity of bits of the HARQ-ACK corresponding to the scheduled cell; and
determining the HARQ-ACK codebook information corresponding to the scheduling signaling according to the HARQ-ACK feedback information corresponding to the scheduled cell.

It should be noted that the quantity of bits of the HARQ-ACK corresponding to the scheduled cell is usually 1 bit or 2 bits.

It should be noted that the influence of the BWP change on the codebook is also considered in the embodiment of the present disclosure. Optionally, in the embodiment of the present disclosure, the method further includes:

when the scheduling signaling corresponding to the first index is before a first change, ignoring the HARQ-ACK codebook information of the scheduling signaling in a case where at least a second condition is satisfied;
the first change includes: a change of an active downlink (DL) BWP.

It should be noted that in the embodiment of the present disclosure, the above process is performed for each scheduling signaling, that is, it is necessary to judge whether the second condition is satisfied for each scheduling signaling.

The second condition includes at least one of the following B11 to B17.

B11: the cell set scheduled by the scheduling signaling is the same as a cell set scheduled by scheduling signaling triggering the first change.

In this case, it can be understood that when a scheduling signaling M triggering the first change schedules the cell set A, and a scheduling signaling N before the scheduling signaling M also schedules the cell set A, the HARQ-ACK codebook information of the scheduling signaling N is ignored and the cycle for the corresponding index of the cell set A is skipped during the construction of the codebook. That is, during the construction of the codebook, it may be dealt as that the scheduling signaling N is not received, that is, it is unnecessary to generate the HARQ-ACK codebook information corresponding to the scheduling signaling N when the scheduling signaling N is not received.

It should be noted here that the cell set scheduled by the scheduling signaling N is the same as the cell set scheduled by the scheduling signaling M, but the cells in the cell sets may be the same or different.

For example, if a DL BWP change occurs after a multi-cell scheduling signaling DCI-1 and the DL BWP change is triggered by a multi-cell scheduling signaling DCI-2, the construction of the HARQ codebook corresponding to DCI-1 is ignored. Here, multi-cell sets scheduled by DCI-1 and DCI-2 are the same.

In this case, it may also be understood that when the DL BWP change is triggered by a single-cell scheduling signaling DCI, a BWP-change timer, a media access control control element (MAC-CE) or a radio resource control (RRC), the construction of the HARQ codebook corresponding to the multi-cell scheduling signaling will not be influenced.

B12: a cell where the first change occurs is one cell in the cell set corresponding to the first index.

It should be noted that the first change occurring in a cell may be triggered by a single-cell scheduling signaling, a BWP change timer, an MAC-CE or an RRC. The cell where the first change occurs may be a cell actually scheduled in a cell set corresponding to a first index X, or may be a configured cell in the cell set.

For example, when an active DL BWP change occurs in the cell A and DCI-1 schedules the cell set where the cell A is located before the active DL BWP change, the HARQ-ACK feedback information of DCI-1 is ignored.

B13: the cells scheduled by the scheduling signaling include the cell where the first change occurs.

The above case may be understood as that the HARQ-ACK codebook information of the scheduling signaling is ignored as long as the cell where the first change occurs is scheduled by the scheduling signaling.

Specifically, DCI-1 is a multi-cell scheduling signaling, and the condition for ignoring the construction of the HARQ codebook corresponding to DCI-1 is:

after DCI-1, the BWP change occurs in at least one of the cells actually scheduled by DCI-1 (the BWP change may be triggered by a single-cell scheduling signaling DCI, or a multi-cell scheduling signaling DCI, or a BWP change timer, or an MAC-CE, or an RRC).

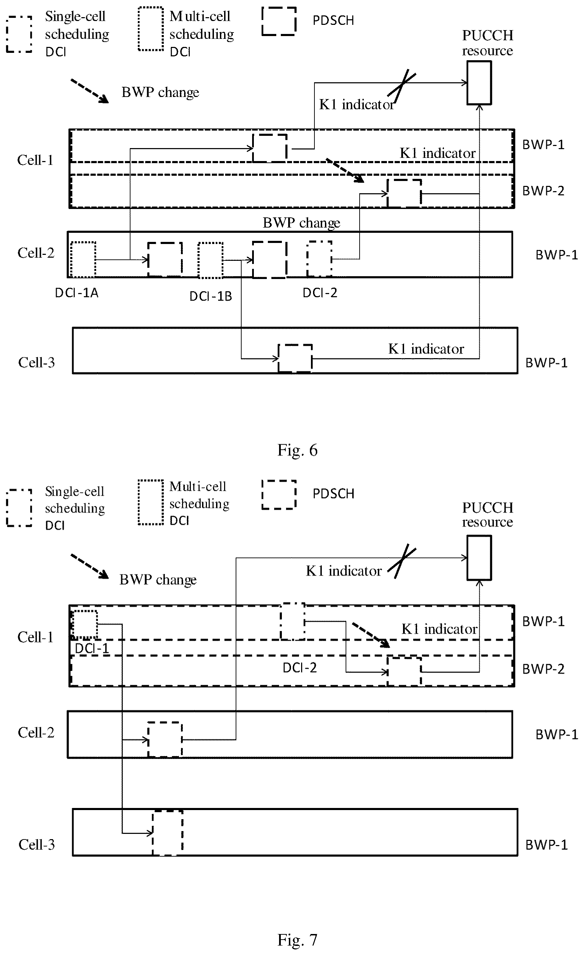

Description is given by taking the triggering of the BWP change by the single-cell scheduling signaling as an example. As illustrated in Fig. 6, DCI-2 is a single-cell scheduling signaling, which schedules the data of BWP-2 of cell-1 (the BWP change occurs in cell-1).

B131: DCI-1A is a multi-cell scheduling signaling, which schedules the data of cell-1 and cell-2; DCI-2 schedules the data of cell-1 and instructs cell-1 to perform an active BWP change. Because DCI-1 includes a cell indicated by DCI-2 where BWP change occurs, the construction of the HARQ codebook corresponding to DCI-1A is ignored.

B132: DCI-1B is a multi-cell scheduling signaling, which schedules the data of cell-3 and cell-2; DCI-2 schedules the data of cell-1 and instructs cell-1 to perform an active BWP change. Because the cells scheduled by DCI-1B do not include a cell indicated by DCI-2 where BWP change occurs, the construction of the HARQ codebook corresponding to DCI-1B is not ignored.

B14: a DL BWP change occurs in all cells of the cell set corresponding to the first index.

The above case can be understood as that the HARQ-ACK codebook information of the scheduling signaling is ignored only when the DL BWP change occurs in each cell of the cell set scheduled by the scheduling signaling.

For example, when DCI-1 is a multi-cell scheduling signaling, the construction of the HARQ codebook corresponding to DCI-1 is ignored in the following case:

a DL BWP change occurs in all cells of the cell set corresponding to the scheduling signaling DCI-1.

For example, the cell set c is configured with four cells, i.e., CELL1-1, CELL-2, CELL-3 and CELL-4, wherein DCI-1 schedules the PDSCHs of one or more cells in the cell set c. After DCI-1, the construction of the HARQ codebook corresponding to DCI-1 is ignored only when a DL BWP change occurs in each of the four cells in the cell set c, otherwise (i.e., as long as the DL BWP change does not occur in one cell in the cell set c), it is necessary to schedule the corresponding PDSCHs to construct the HARQ codebook corresponding to DCI-1.

B15: the cell where the scheduling signaling is sent is the same as the cell where the first change occurs.

In this case, the HARQ-ACK codebook information of the scheduling signaling is ignored only when the first change occurs in the cell which sends the scheduling signaling.

That is, after the multi-cell scheduling signaling DCI-1, the generation of the HARQ-ACK for the multi-cell scheduling signaling DCI-1 is ignored only when the DL BWP change occurs in a scheduling cell. Specifically, the scheduling cell refers to a cell which sends the multi-cell scheduling signaling. The DL BWP change in the scheduling cell is a change triggered by any means, including: a DL BWP change triggered by a multi-cell scheduling signaling, a DL BWP change triggered by a single-cell scheduling signaling, a DL BWP change triggered by a timer, a DL BWP change triggered by an MAC-CE, or a DL BWP change triggered by an RRC.

For example, as illustrated in Fig. 7, DCI-1 is a multi-cell scheduling signaling, which schedules the data of cell-2 and cell-3. Cell-1 is a scheduling cell, i.e., a cell where DCI-1 is sent. After DCI-1, when a DL BWP change (triggered by DCI-2) occurs in cell-1 before the PUCCH feedback resource indicated by DCI-1, the generation of the HARQ-ACK corresponding to the multi-cell scheduling signaling DCI-1 is ignored.

B16: the first change causes a quantity of bits of the HARQ-ACK codebook information corresponding to the scheduling signaling to vary.

B17: the first change causes a PDSCH candidate reception position corresponding to the scheduling signaling to vary.

The above two cases can be understood as that when the first change causes the quantity of bits of the HARQ-ACK feedback corresponding to the scheduling signaling to vary, or the PDSCH candidate reception position to vary, the HARQ-ACK codebook information corresponding to the scheduling signaling is ignored.

It should be noted that the first change in the scheduling cell is a change triggered by any means, including: a DL BWP change triggered by a multi-cell scheduling signaling, a DL BWP change triggered by a single-cell scheduling signaling, a DL BWP change triggered by a timer, a DL BWP change triggered by an MAC-CE, or a DL BWP change triggered by an RRC.

It should be noted that the change of the PDSCH candidate reception position may mean that a time domain resource allocation table for determining PDSCH time domain information is changed due to the DL BWP change.

For example, after multi-cell scheduling signaling DCI-1, the terminal ignores the generation of the HARQ-ACK for the multi-cell scheduling signaling DCI-1 only when the DL BWP change causes the change of the quantity of bits of the HARQ-ACK feedback or the change of the PDSCH candidate reception position.

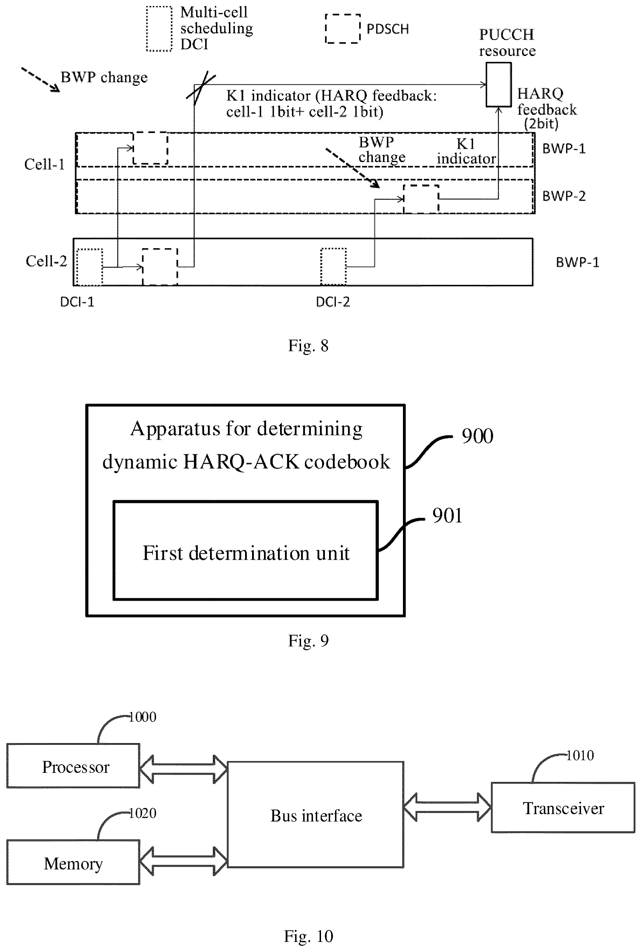

For example, as illustrated in Fig. 8, DCI-1 is a multi-cell scheduling signaling, which schedules BWP-1 data of cell-2 and BWP-1 data of cell-1, and the HARQ feedback corresponding to the scheduling signaling DCI-1 is (1bit of cell 1+1 bit of cell 2). DCI-2 is a single-cell scheduling, which schedules BWP-2 data of cell-1 (a BWP change, i.e., cell-1 has a BWP change occurred), and the quantity of bits of the HARQ ACK feedback corresponding to cell-1 is changed from 1 bit to 2 bits.

DCI-1 is a multi-cell scheduling signaling, which schedules the data of cell-1 and cell-2. DCI-2 schedules the data of cell-1 and instructs cell-1 to perform an active BWP change. After the active BWP change, the quantity of bits of the HARQ-ACK feedback of cell-1 is changed (from 1 bit to 2 bits), and the construction of the HARQ codebook corresponding to DCI-1A is ignored.

In the above case, due to the change of the quantity of bits of the feedback of cell-1, a total quantity of bits of the feedback of DCI-1 is changed (e.g., from 2 bits to 3 bits), or the meaning of bits of the feedback information is changed (e.g., before the change, the first bit is the HARQ feedback of cell-1, and the second bit is the HARQ feedback of cell-2; and after the change, the first two bits are the HARQ feedback of cell-1, and the third bit is the HARQ feedback of cell-2).

It should also be noted that regarding B11 to B17 described above, in one multi-cell scheduling DCI, when the HARQ-ACK information is to be fed back, the HARQ information of the PDSCH of the scheduling cell is not fed back, and for some cells, ACK or NACK is fed back according to the decoding result of the PDSCH. For the HARQ information corresponding to the PDSCH of the serving cell without feedback, the processing modes are as follows:

C11: padded with NACK, and the quantity of padded bits (1 bit or 2 bits) is determined according to an active BWP before the BWP change;

C12: ACK or NACK is fed back according to the actual decoding result, and the quantity of padded bits (1 bit or 2 bits) is determined according to an active BWP before the BWP change;

C13: padded with NACK, and the quantity of padded bits (1 bit or 2 bits) is determined according to an active BWP after the BWP change; or

C14: no information is fed back, i.e., it is deemed that the DCI has not scheduled the PDSCH of the cell.

It should be noted that the method of the embodiment of the present disclosure can be applied to both a terminal and a network device.

Taking an HARQ feedback of the terminal as an example, the specific implementation of the embodiment of the present disclosure is illustrated as follows.

Specific application 1: the codebook is constructed using the indexes of the cell sets, in which the influence of the BWP change on the codebook is included in the technical solution.

The specific implementation is as follows.

1. Cell set indexes (cell-set c) configured by all higher layer signaling (c is a cell set index) are traversed to determine the HARQ-ACK feedback information corresponding to the multi-cell scheduling signaling DCIs of the same PDCCH MO.

2. For a cell-set c and a PDCCH MO m, if m is before the BWP change, and there is no DCI in m to trigger a DL BWP change, the HARQ-ACK feedback operation for the cell-set c is ignored.

Specifically, change 1 is an active DL BWP change of any serving cell in the cell set corresponding to the cell set index c.

3. For a PDCCH MO m associated with a cell-set c, if the scheduling signaling is a multi-cell scheduling DCI, and at least one of the scheduled cells has an HARQ procedure with enabled HARQ-ACK feedback, a corresponding HARQ-ACK generation process is performed to generate $N_{\text{HARQ}-\text{ACK,max}}^{\text{Multi-cell, max}}$ bits, and the process includes the following D11 to D14.

D11: for one multi-cell scheduling signalling, HARQ information of $N_{\text{HARQ}-\text{ACK,max}}^{\text{Multi-cell, max}}$ bits is generated, where $N_{\text{HARQ}-\text{ACK,max}}^{\text{Multi-cell, max}}$ is a maximum quantity of bits to be fed back.

D12: an order of generating the HARQ ACK bits is determined according to an ascending (or descending) order of scheduled cell indexes.

D13: the quantity of HARQ-ACK bits (1 bit or 2 bits) corresponding to each scheduled cell is determined according to the parameter configuration of the currently active BWP (or in the scheduled cell, as long as there is one configured BWP parameter indicating that 2 bits are to be fed back, 2 bits are fed back in the scheduled cell, otherwise 1 bit is fed back).

D14: if the UE is configured with a plurality of cell sets, $N_{\text{HARQ}-\text{ACK,max}}^{\text{Multi-cell, max}}$ is a maximum value of the quantities of bits fed back by the plurality of cell sets.

The process of constructing a codebook is described in detail as follows by way of example.

C-DAI is labelled as $V_{C-\text{DAI}}^{\text{DL}}$, $T_D = 2^{N_{C-\text{DAI}}^{\text{DL}}}$, where $N_{C-\text{DAI}}^{\text{DL}}$ is a quantity of counter bits of C-DAI (here, it is understood as 2, i.e., $T_D = 4$). When the serving cell-set is c and the PDCCH monitoring occasion is m, $V_{C-\text{DAI},c,m}^{\text{DL}}$ is a C-DAI value of the corresponding DCI, $V_{T-\text{DAI},m}^{\text{DL}}$ is T-DAI.

If the UE sends the HARQ-ACK information on the PUCCH of slot n, and the sent HARQ-ACK information is $\tilde{o}_0^{ACK}, \tilde{o}_1^{ACK}, \cdots, \tilde{o}_{O_{\text{ACK}}-1}^{ACK}$, the following pseudo-code process is used to generate the HARQ information with a total quantity of $O_{\text{ACK}}$ bits.

It is set that

$m = 0$;

$j = 0$;

$V_{temp} = 0$, where $V_{temp}$ indicates a temporary value of C-DAI;

$V_{temp2} = 0$, where $V_{temp2}$ indicates a temporary value of T-DAI;

$V_s = \varnothing$ // an empty set;

$N_{\text{cell\_sets}}^{\text{DL}}$ is the quantity of serving cell sets configured by the higher layer signaling ( $N_{\text{cells}}^{\text{DL}}$ may be 1, 2, 4 or 8);

$M$ is the quantity of PDCCH MOs;

$N_{\text{HARQ}-\text{ACK,max}}^{\text{Multi-cell, max}} = \text{MAX\_TB}$ // $N_{\text{HARQ}-\text{ACK,max}}^{\text{Multi-cell, max}}$ is the quantity of HARQ-ACK bits generated for one DCI, MAX_TB is configured by the base station or calculated by the terminal, and if the UE is configured with a plurality of cell sets, MAX_TB is a maximum value of the quantities of bits $N_{\text{HARQ}-\text{ACK,max}}^{\text{Multi-cell, max}}$ fed back by the plurality of cell sets.

while $m < M$ // while m<M, the following cycle is performed {

Set $c = 0$, where c is a serving cell set index, and the index number of each serving cell set is configured by the higher layer signaling;

while $c < N_{\text{cell\_sets}}^{\text{DL}}$ // cycling through all configured serving cell-sets c {

For the PDCCH MO m, if m is before the active DL BWP change of any cell in the cell set corresponding to the serving cell-set c and there is no DCI in m to trigger the DL BWP change, the following step 3 (i.e., the HARQ-ACK feedback operation for the serving cell-set c is ignored) is performed.

Step 3: $c = c + 1$; (it means that the multi-cell DCI scheduling of this MO is ignored during the construction of the HARQ-ACK information);

otherwise//remarks: branch contrary to step 3: $c = c + 1$

$$\{$$

In the PDCCH MO m associated with the serving cell-set c, in a case where at least one of the scheduled cells has an HARQ procedure with enabled HARQ-ACK information feedback,

$$\text{if } V^{\text{DL}}_{C-\text{DAI},c,m} \leq V_{temp}$$

$$j = j + 1;$$

$$//\text{Remarks: end condition } V^{\text{DL}}_{C-\text{DAI},c,m} \leq V_{temp}$$

$$V_{temp} = V^{\text{DL}}_{C-\text{DAI},c,m};$$

$$\text{if } V^{\text{DL}}_{\text{T-DAI},m} = \emptyset$$

$$V_{temp,2} = V^{\text{DL}}_{C-\text{DAI},c,m};$$

otherwise

$$V_{temp,2} = V^{\text{DL}}_{T-\text{DAI},m};$$

$$//\text{Remarks: end condition } V^{\text{DL}}_{\text{T-DAI},m} = \emptyset$$

For each multi-cell scheduling signaling DCI, $N^{\text{Multi-cell, max}}_{\text{HARQ}-\text{ACK,max}}$ HARQ bit information $\tilde{o}^{TMP}_0, \tilde{o}^{TMP}_1, \dots \tilde{o}^{TMP}_{N^{\text{Multi-cell, max}}_{\text{HARQ}-\text{ACK,max}}-1}$ are generated, the process includes the following steps E11 to E13.

E11: an order of generating the HARQ ACK bits is determined according to an ascending (or descending) order of scheduled cell indexes.

E12: the HARQ-ACK bit information and the quantity thereof (1 bit or 2 bits) corresponding to each scheduled cell are determined according to the parameter configuration *(harq-ACK-SpatialBundlingPUCCH, maxNrofCodeWordsScheduledByDCI)* of the currently active BWP as follows.

E121: for the active BWP of the scheduled cell, if the UE is not provided with *harq-ACK-SpatialBundlingPUCCH* and the parameter *maxNrofCodeWordsScheduledByDCI* is configured as 2, 2-bit information is generated, i.e., the decoding result of the first TB corresponds to the first bit, and the decoding result of the second TB corresponds to the second bit.

E122: for the active BWP of the scheduled cell, if the UE is not provided with *harq-ACK-SpatialBundlingPUCCH* and the parameter *maxNrofCodeWordsScheduledByDCI* is configured as 2, 1-bit information is generated, i.e., the bits of the decoding results of two scheduled TBs are Boolean ANDed.

E123: otherwise (i.e., the conditions of E121 and E122 are not satisfied), 1-bit information is generated, i.e., there is only one scheduled TB, and its decoding result is used as the HARQ-ACK information.

E13: if the quantity of bits X generated by all the scheduled cells is less than $N^{\text{Multi-cell, max}}_{\text{HARQ}-\text{ACK,max}}$, $N^{\text{Multi-cell, max}}_{\text{HARQ}-\text{ACK,max}} - X$ sequential values are padded with NACK.

Remarks: for a scheduled cell for which data is scheduled and HARQ is disabled, one of the following two modes may be adopted.

The quantity of bits is determined according to the modes of E11 and E12, but the value is set to NACK.

The quantity of bits is determined according to the modes of E11 and E12, and the value is the actual decoding result.

The HARQ-ACK generation process of the scheduled cell is ignored (i.e., the quantity of bits generated for all the scheduled cells decreases).

For ii=0 to $N_{\text{HARQ-ACK,max}}^{\text{Multi-cell, max}} - 1$ , each $\tilde{o}_{ii}^{TMP}$ information is copied into the feedback HARQ information sequence (as follows):

Ii=0

While ii$<N_{\text{HARQ-ACK,max}}^{\text{Multi-cell, max}}$

{

$$\tilde{o}_{N_{\text{HARQ-ACK,max}}^{\text{Multi-cell, max}}*(T_D \cdot j + V_{C-\text{DAI},c,m}^{\text{DL}})-1+\text{ii}}^{ACK} = \tilde{o}_{ii}^{TMP} \quad )$$

$$V_s = V_s \cup \left\{ N_{\text{HARQ-ACK,max}}^{\text{Multi-cell, max}} * (T_D \cdot j + V_{C-\text{DAI},c,m}^{\text{DL}}) - 1 + \text{ii} \right\}$$

Ii = ii+1

}

//end if remarks: the end condition judges the quantity of HARQ-ACK bits generated for the PDSCH

//end if remarks: an HARQ procedure for the scheduled PDSCH is set to be enabled

$c = c + 1$ remarks: the serving cell set index increments by 1

//end if

} end while //cycling through all configured serving cell-sets c

$m = m + 1$

} end while  // end m<M cycle

$$V_{temp} = \left( j \bmod \left( \frac{4}{T_D} \right) \right) \times \left( \frac{4}{T_D} \right) + V_{temp}$$

if the UE is not configured with $V_{temp2} = V_{\text{T}-DAI}^{UL}$, and $T_D = 2$

$$V_{temp2} = V_{temp}$$

// end if

$$j = \left\lfloor \frac{j \times T_D}{4} \right\rfloor$$

if $V_{temp2} < V_{temp}$

$$j = j + 1 \ ;$$

//end if

$$O^{ACK} = \left(4 \cdot j + V_{temp2}\right) * N_{\text{HARQ}-\text{ACK,max}}^{\text{Multi-cell, max}}$$ (i.e., the total quantity of bits of the

feedback);

// end if

$$\tilde{o}_i^{ACK} = \text{NACK} \quad \text{for} \quad \text{any} \quad i \in \{0,1,\cdots,O^{ACK}-1\}\backslash V_s \quad \text{(i.e.,} \quad \text{the} \quad \text{codebook}$$

corresponding to the lost DCI is padded with NACK).

Specific application 2: the codebook is constructed using the index of the reference serving cell.
The specific implementation is as follows.

1. The serving cell indexes c configured by all higher layer signaling are traversed (each cell set corresponds to one reference serving cell, and the traversed reference serving cells c are configured by the higher layer signaling or judged according to the DCI) to determine the HARQ-ACK feedback information corresponding to the multi-cell scheduling signaling DCIs of the same PDCCH MO.

2. For a reference serving cell c and a PDCCH MO m, when m is before the following BWP change, and there is no DCI in m to trigger a DL BWP change, the HARQ-ACK feedback operation for the reference serving cell c is ignored. Specifically, change 1 is an active DL BWP change of any serving cell in the cell set corresponding to the reference serving cell c.

3. For a PDCCH MO m associated with the multi-cell scheduling signaling DCI, when at least one of the PDSCH data of the scheduled cells has an HARQ procedure with enabled HARQ-ACK information feedback, a corresponding HARQ-ACK generation process is performed to generate $N_{\text{HARQ}-\text{ACK,max}}^{\text{Multi-cell, max}}$ bits, and the process includes the following D21 to D24.

D21: for one multi-cell scheduling signalling, HARQ information of $N_{\text{HARQ}-\text{ACK,max}}^{\text{Multi-cell, max}}$ bits is generated, where $N_{\text{HARQ}-\text{ACK,max}}^{\text{Multi-cell, max}}$ is a maximum quantity of bits to be fed back.

D22: an order of generating the HARQ ACK bits is determined according to an ascending (or descending) order of scheduled cell indexes.

D23: the quantity of HARQ-ACK bits (1 bit or 2 bits) corresponding to each scheduled cell is determined according to the parameter configuration of the currently active BWP (or in the scheduled cell, as long as there is one configured BWP parameter indicating that 2 bits are to be fed back, 2 bits are fed back in the scheduled cell, otherwise 1 bit is fed back).

D24: if the UE is configured with a plurality of cell sets, $N_{\text{HARQ}-\text{ACK,max}}^{\text{Multi-cell, max}}$ is a maximum value of the quantities of bits fed back by the plurality of cell sets.

The process of constructing a codebook is described in detail as follows by way of example.

C-DAI is labelled as $V_{C-\text{DAI}}^{\text{DL}}$, $T_D = 2^{N_{C-\text{DAI}}^{\text{DL}}}$, where $N_{C-\text{DAI}}^{\text{DL}}$ is a quantity of counter bits of C-DAI (here, it is understood as 2, i.e., $T_D$ = 4). When the serving cell-set is c and the PDCCH monitoring occasion is m, $V_{C-\text{DAI},c,m}^{\text{DL}}$ is a C-DAI value of the corresponding DCI, $V_{T-\text{DAI},m}^{\text{DL}}$ is T-DAI.

If the UE sends the HARQ-ACK information on the PUCCH of slot n, and the sent HARQ-ACK information is $\tilde{o}_0^{ACK}, \tilde{o}_1^{ACK}, \cdots, \tilde{o}_{O_{\text{ACK}}-1}^{ACK}$, the following pseudo-code process is used to generate the HARQ information with a total quantity of $O^{ACK}$ bits.

It is set that

m = 0;
j = 0;
$V_{temp}$ = 0;
$V_{temp2}$ = 0;
$V_s$ = Ø // an empty set;
$N_{\text{cells}}^{\text{DL}}$ is the quantity of serving cells configured by the higher layer signaling;
M is the quantity of PDCCH MOs;

$N_{\text{HARQ}-\text{ACK,max}}^{\text{Multi-cell, max}} = \text{MAX\_TB}$ // $N_{\text{HARQ}-\text{ACK,max}}^{\text{Multi-cell, max}}$ is the quantity of HARQ-ACK bits generated for one DCI, MAX_TB is configured by the base station or calculated by the terminal, and if the UE is configured with a plurality of cell sets, MAX_TB is a maximum value of the quantities of bits $N_{\text{HARQ}-\text{ACK,max}}^{\text{Multi-cell, max}}$ fed back by the plurality of cell sets.

while m < M // while m<M, the following cycle is performed
{
Set c = 0, where c is a reference serving cell index, and the index number of each reference serving cell and the cell set corresponding to the index number are configured by the higher layer signaling;

while $c < N_{\text{cells}}^{\text{DL}}$ // cycling through all configured reference serving cells c {

For the PDCCH MO m, when m is before the active DL BWP change of any cell in the cell set corresponding to the reference serving cell c and there is no DCI in m to trigger the DL BWP change, the following step 3 (i.e., the HARQ-ACK feedback operation for the reference serving cell c is ignored) is performed.

Step 3: $c = c + 1$;

otherwise//remarks: branch contrary to step 3: $c = c + 1$

{

In the PDCCH MO m associated with the reference serving cell c, in a case where at least one of the PDSCH data of the scheduled cells has an HARQ procedure with enabled HARQ-ACK information feedback,

if $V_{C-\text{DAI},c,m}^{\text{DL}} \le V_{temp}$
j = j + 1;

//Remarks: end condition $V_{C-\text{DAI},c,m}^{\text{DL}} \le V_{temp}$ $V_{temp} = V_{C-\text{DAI},c,m}^{\text{DL}}$ ;

if $V_{T-\text{DAI},m}^{\text{DL}} = \emptyset$ $V_{temp,2} = V_{C-\text{DAI},c,m}^{\text{DL}}$ ;
otherwise

$V_{temp,2} = V_{T-\text{DAI},m}^{\text{DL}}$ ;

//Remarks: end condition $V_{\text{T-DAI},m}^{\text{DL}} = \emptyset$

For each multi-cell scheduling signaling DCI, $N_{\text{HARQ}-\text{ACK,max}}^{\text{Multi-cell, max}}$ HARQ bit information $\tilde{o}_0^{TMP}, \tilde{o}_1^{TMP}, \dots \tilde{o}_{N_{\text{HARQ}-\text{ACK,max}}^{\text{Multi-cell, max}}-1}^{TMP}$ are generated, the process includes the following steps E21 to E23.

E21: an order of generating the HARQ ACK bits is determined according to an ascending (or descending) order of scheduled cell indexes.

E22: the quantity of HARQ-ACK bits (1 bit or 2 bits) corresponding to each scheduled cell is determined according to the parameter configuration (*harq-ACK-SpatialBundlingPUCCH, maxNrofCodeWordsScheduledByDCI)* of the currently active BWP as follows.

E221: for the active BWP of the scheduled cell, if the UE is not provided with *harq-ACK-SpatialBundlingPUCCH* and the parameter *maxNrofCodeWordsScheduledByDCI* is configured as 2, 2-bit information is generated, i.e., 1 bit is generated for each scheduled TB.

E222: for the active BWP of the scheduled cell, if the UE is not provided with *harq-ACK-SpatialBundlingPUCCH* and the parameter *maxNrofCodeWordsScheduledByDCI* is configured as 2, 1-bit information is generated, i.e., HARQ-ACK bits for every two scheduled TBs are Boolean ANDed.

E223: otherwise (i.e., the conditions of E221 and E222 are not satisfied), 1-bit information is generated, i.e., there is only one scheduled TB.

E23: if the quantity of bits generated is less than $N_{\text{HARQ}-\text{ACK,max}}^{\text{Multi-cell, max}}$, the sequence is padded with NACK.

Remarks: for a scheduled cell with HARQ disabled, one of the following two modes may be adopted.

The quantity of bits is determined according to the modes of E21 and E22, but the value is set to NACK.

The HARQ-ACK generation process of the scheduled cell is ignored.

For ii=0 to $N_{\text{HARQ}-\text{ACK,max}}^{\text{Multi-cell, max}} - 1$, each $\tilde{o}_{ii}^{TMP}$ information is copied into the feedback HARQ information sequence (as follows):

Ii=0

While ii<$N_{\text{HARQ-ACK,max}}^{\text{Multi-cell, max}}$

{

$\tilde{o}_{N_{\text{HARQ-ACK,max}}^{\text{Multi-cell, max}}*(T_D \cdot j + V_{C-\text{DAI},c,m}^{\text{DL}})-1+\text{ii}}^{ACK} = \tilde{o}_{ii}^{TMP}$ )

$V_S = V_S \cup \{N_{\text{HARQ-ACK,max}}^{\text{Multi-cell, max}} * (T_D \cdot j + V_{C-\text{DAI},c,m}^{\text{DL}}) - 1 + \text{ii}\}$

Ii = ii+1

}

//end if remarks: the end condition judges the quantity of HARQ-ACK bits generated for the PDSCH

//end if remarks: an HARQ procedure for the scheduled PDSCH is set to be enabled

$c = c + 1$

//end if

} end while //cycling through all configured reference serving cells c

$m = m + 1$

} end while    // end m<M cycle

$$V_{temp} = \left(j \bmod \left(\frac{4}{T_D}\right)\right) \times \left(\frac{4}{T_D}\right) + V_{temp}$$

if the UE is not configured with $V_{temp2} = V_{T-DAI}^{UL}$, and $T_D = 2$

$V_{temp2} = V_{temp}$

// end if

$j = \left\lfloor \frac{j \times T_D}{4} \right\rfloor$

if $V_{temp2} < V_{temp}$

$j = j + 1$ ;

//end if

$O^{ACK} = \left(4 \cdot j + V_{temp2}\right) * N_{\text{HARQ-ACK,max}}^{\text{Multi-cell, max}}$ ;

// end if

$$\tilde{o}_i^{ACK} = \text{NACK} \text{ for any } i \in \{0,1,\cdots,O^{ACK} - 1\}\backslash V_S.$$

The embodiment of the present disclosure solves the problem of the construction of a Type-2 HARQ-ACK codebook when one DCI schedules PDSCHs on a plurality of cells, so that multi-cell scheduling can be performed more effectively.

The technical solutions according to the embodiments of the present disclosure are applicable to various systems, in particular 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE frequency division duplex (FDD) system, an LTE time division duplex (TDD) system, a Long Term Evolution Advanced (LTE-A) system, a universal mobile telecommunication system (UMTS), a worldwide interoperability for microwave access (WiMAX) system, a 5G new radio (NR) system, etc. These various systems each include a terminal device and a network device. The system may further include a core network part, such as an evolved packet system (EPS), a 5G system (5GS), etc.

The terminal (also called terminal device) involved in the embodiments of the present disclosure may refer to a device providing voice and/or data connectivity to a user, a handheld device having a wireless connection function, any other processing device connected to a wireless modem, etc. In different systems, the name of the terminal device may be different, and for example, in a 5G system, the terminal device may be referred to as user equipment (UE). The wireless terminal device may be communicated with one or more core networks (CNs) via a radio access network (RAN). The wireless terminal device may be a mobile terminal device such as a mobile phone (or referred to as a "cellular" phone) or a computer with a mobile terminal device, such as a portable, pocket-sized, handheld, computer-embedded or vehicle-mounted mobile device, which exchanges speech and/or data with the radio access network. For example, the terminal device may be a personal communication service (PCS) phone, a cordless phone, a session initiated protocol (SIP) phone, a wireless local loop (WLL) station, a personal digital assistant (PDA), or the like. The wireless terminal device may also be referred to as a system, a subscriber unit, a subscribe station, a mobile station, a mobile, a remote station, an access point, a remote terminal, an access terminal, a user terminal, a user agent, and a user device, which are not limited in the embodiments of the present disclosure.

The network device involved in the embodiments of the present disclosure may be a base station, which may include a plurality of cells that provide services to the terminal. Depending on the specific application scenarios, the base station may also be referred to as an access point, or a device in an access network which is communicated with the wireless terminal device over an air interface through one or more sectors, or have other names. The network device may be used to exchange the received air frames with an Internet Protocol (IP) packet, so as to serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (base transceiver station, BTS) in global system for mobile communications (GSM) or code division multiple access (CDMA), or a network device (NodeB) in wide-band dode division multiple access (WCDMA), or an evolutional network device (evolutional NodeB, eNB or e-NodeB) in a Long Term Evolution (LTE) system, or a 5G base station (gNB) in a 5G network architecture (next generation system), or a Home evolved Node B (HeNB), a relay node, a femto, a pico, etc., which is not limited in the embodiments of the present disclosure. In some network architectures, the network device may include a centralized unit (CU) node and a distributed unit (DU) node, and a CU and a DU may also be geographically separated.

The network device and the terminal device may each use one or more antennas to perform multi input multi output (MIMO) transmission which may be single user MIMO (SU-MIMO) or multiple user MIMO (MU-MIMO). Depending on the form and the quantity of the antenna combinations, the MIMO transmission may be 2-dimension MIMO (2D MIMO), 3-dimension MIMO (3D MIMO), full dimension MIMO (FD-MIMO) or massive-MIMO, and may also be diversity transmission or precoding transmission or beamforming transmission, etc.

As illustrated in Fig. 9, an embodiment of the present disclosure provides an apparatus 900 for determining a dynamic HARQ-ACK codebook, which is applied to a terminal or a network device, the apparatus including:

a first determination unit 901 configured to determine dynamic HARQ-ACK codebook information based on a first index;

wherein the first index includes an index of a cell set or an index of a reference serving cell; and

reference serving cells correspond to cell sets in a one-to-one relationship, and the cell set includes at least two serving cells.

Optionally, the first determination unit 901 is configured to:

determine a first index indicated by scheduling signaling corresponding to a physical downlink control channel (PDCCH) monitoring occasion (MO); and

determine HARQ-ACK codebook information corresponding to the scheduling signaling based on the first index;

wherein the scheduling signaling is used for scheduling at least one cell in the cell set.

Optionally, an implementation of the determining the HARQ-ACK codebook information corresponding to the scheduling signaling based on the first index includes:

when a first condition is satisfied, determining the HARQ-ACK codebook information corresponding to the scheduling signaling based on scheduled cells in the cell set indicated by the first index;

wherein the first condition includes: at least one of the cells scheduled by the scheduling signaling has an HARQ procedure with enabled HARQ-ACK feedback.

Optionally, an implementation of the determining the HARQ-ACK codebook information corresponding to the scheduling signaling based on the scheduled cells in the cell set indicated by the first index includes:

determining the HARQ-ACK codebook information corresponding to the scheduling signaling according to a first order of indexes of the scheduled cells in the cell set indicated by the first index;

wherein the first order includes an ascending order or a descending order.

Optionally, an implementation of the determining the HARQ-ACK codebook information corresponding to the scheduling signaling includes:

determining a quantity of bits of HARQ-ACK corresponding to the scheduled cell according to a parameter configuration of a currently active bandwidth part (BWP) of the scheduled cell;

determining HARQ-ACK feedback information corresponding to the scheduled cell according to the quantity of bits of the HARQ-ACK corresponding to the scheduled cell; and

determining the HARQ-ACK codebook information corresponding to the scheduling signaling according to the HARQ-ACK feedback information corresponding to the scheduled cell.

Optionally, the quantity of bits of the HARQ-ACK codebook information corresponding to the scheduling signaling is Y, Y being an integer greater than or equal to 1; the apparatus further includes:

a second determination unit configured to, when the terminal is configured with one cell set, determine a maximum quantity of bits to be fed back corresponding to the cell set that corresponds to the first index indicated by the scheduling signaling as Y; or

when the terminal is configured with at least two cell sets, determine a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

Optionally, the apparatus further includes:

a performing unit configured to, when the scheduling signaling corresponding to the first index is before a first change, ignore the HARQ-ACK codebook information of the scheduling signaling in a case where at least a second condition is satisfied;

the first change includes: a change of an active downlink (DL) BWP;

wherein the second condition includes at least one of:

the cell set scheduled by the scheduling signaling is the same as a cell set scheduled by scheduling signaling triggering the first change;

a cell where the first change occurs is one cell in the cell set corresponding to the first index;

the cells scheduled by the scheduling signaling include the cell where the first change occurs;

a DL BWP change occurs in all cells of the cell set corresponding to the first index;

the cell where the scheduling signaling is sent is the same as the cell where the first change occurs;

the first change causes a quantity of bits of the HARQ-ACK codebook information corresponding to the scheduling signaling to vary; or

the first change causes a PDSCH candidate reception position corresponding to the scheduling signaling to vary.

It should be noted that the division of the units in the embodiments of the present disclosure is schematic, which is only a division of logical functions, and there may be other division modes in practice. In addition, various functional units in the embodiments of the present disclosure may be integrated into a processing unit, or physically existed separately, or two or more units may be integrated into one unit. The integrated unit may be implemented in the form of hardware, or a software functional unit.

The integrated unit, when implemented in the form of a software functional unit and sold or used as a separate product, may be stored in a processor-readable storage medium. Based on such understanding, the essence of a technical solution of the present disclosure or a part thereof that contributes to the related art or all or part of the technical solution may be embodied in the form of a software product. The computer software product is stored in a storage medium, and includes a plurality of instructions to cause a computer device (which may be a personal computer, a server, a network device, or the like) or a processor to perform all or part of the steps of the method described in various embodiments of the present disclosure. The storage medium includes various media capable of storing program codes, such as a U disk, a mobile hard disk, a read-only memory (ROM), a random access memory (RAM), a magnetic disk, or an optical disk.

As illustrated in Fig. 10, an embodiment of the present disclosure further provides a communication device, which is a terminal or a network device, the communication device including a processor 1000, a transceiver 1010, a memory 1020 and a program stored in the memory 1020 and runnable in the processor 1000; wherein the transceiver 1010 is connected to the processor 1000 and the memory 1020 through a bus interface, and wherein the processor 1000 is configured to read the programs in the memory and perform the following steps:

determining dynamic HARQ-ACK codebook information based on a first index;
wherein the first index includes an index of a cell set or an index of a reference serving cell; and
reference serving cells correspond to cell sets in a one-to-one relationship, and the cell set includes at least two serving cells.

The transceiver 1010 is configured to transmit and receive data under the control of the processor 1000.

In which, in Fig. 10, a bus architecture may include any number of interconnected buses and bridges, and specifically various circuits of one or more processors represented by the processor 1000 and the memory represented by the memory 1020 are linked together. The bus architecture may also link together various other circuits, such as a peripheral device, a voltage stabilizer, a power management circuit, etc., which are well known in the art and not further described herein. The bus interface provides an interface. The transceiver 1010 may be composed of a plurality of elements, i.e., including a transmitter and a receiver, so as to provide units for communication with various other devices over a transmission medium including a wireless channel, a wired channel, a fiber optic cable, or the like. For different user equipment, a user interface may also be an interface capable of externally or internally connecting a desired device including, but not limited to, a keypad, a display, a speaker, a microphone, a joystick, or the like.

The processor 1000 is responsible for managing a bus architecture and general processing, and the memory 1020 may store data used by the processor 1000 in performing operations.

Optionally, the processor 1000 may be a central processing unit (CPU), an application specific integrated circuit (ASIC), a field-programmable gate array (FPGA), or a complex programmable logic device (CPLD). The processor may also adopt a multi-core architecture.

The processor calls the computer program stored in the memory, and performs any one of the methods in the embodiments of the present disclosure according to an obtained executable instruction. The processor and the memory may also be physically separated.

Optionally, the processor is configured to read the computer program in the memory and perform the following steps:

determining the first index indicated by scheduling signaling corresponding to a physical downlink control channel (PDCCH) monitoring occasion (MO); and
determining HARQ-ACK codebook information corresponding to the scheduling signaling based on the first index;
wherein the scheduling signaling is used for scheduling at least one cell in the cell set.

Optionally, the processor is configured to read the computer program in the memory and perform the following step:

when a first condition is satisfied, determining the HARQ-ACK codebook information corresponding to the scheduling signaling based on scheduled cells in the cell set indicated by the first index;
wherein the first condition includes: at least one of the cells scheduled by the scheduling signaling has an HARQ procedure with enabled HARQ-ACK feedback.

Optionally, the processor is configured to read the computer program in the memory and perform the following step:

determining the HARQ-ACK codebook information corresponding to the scheduling signaling according to a first order of indexes of the scheduled cells in the cell set indicated by the first index;

wherein the first order includes an ascending order or a descending order.

Optionally, the processor is configured to read the computer program in the memory and perform the following steps:

determining a quantity of bits of HARQ-ACK corresponding to the scheduled cell according to a parameter configuration of a currently active bandwidth part (BWP) of the scheduled cell;

determining HARQ-ACK feedback information corresponding to the scheduled cell according to the quantity of bits of the HARQ-ACK corresponding to the scheduled cell; and

determining the HARQ-ACK codebook information corresponding to the scheduling signaling according to the HARQ-ACK feedback information corresponding to the scheduled cell.

Optionally, the quantity of bits of the HARQ-ACK codebook information corresponding to the scheduling signaling is Y, Y being an integer greater than or equal to 1; and the processor is configured to read the computer program in the memory and perform the following step:

when a terminal is configured with one cell set, determining a maximum quantity of bits to be fed back corresponding to the cell set that corresponds to the first index indicated by the scheduling signaling as Y; or

when the terminal is configured with at least two cell sets, determining a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

Optionally, the processor is configured to read the computer program in the memory and perform the following step:

when the scheduling signaling corresponding to the first index is before a first change, ignoring the HARQ-ACK codebook information of the scheduling signaling in a case where at least a second condition is satisfied;

the first change includes: a change of an active downlink (DL) BWP;

wherein the second condition includes at least one of:

the cell set scheduled by the scheduling signaling is the same as a cell set scheduled by scheduling signaling triggering the first change;

a cell where the first change occurs is one cell in the cell set corresponding to the first index;

the cells scheduled by the scheduling signaling include the cell where the first change occurs;

a DL BWP change occurs in all cells of the cell set corresponding to the first index;

the cell where the scheduling signaling is sent is the same as the cell where the first change occurs;

the first change causes a quantity of bits of the HARQ-ACK codebook information corresponding to the scheduling signaling to vary; or

the first change causes a PDSCH candidate reception position corresponding to the scheduling signaling to vary.

At least embodiment of the present disclosure further provides a communication device, which is a terminal device or a network device, the communication device including a memory, a processor, and a program stored in the memory and runnable in the processor; wherein when executing the program, the processor implements various processes in the method embodiments for determining the dynamic HARQ-ACK codebook, and achieves the same technical effects, which are omitted here to avoid repetition.

At least embodiment of the present disclosure further provides a processor-readable storage medium storing a computer program, wherein when executed by a processor, the program implements various processes in the method embodiments for determining the dynamic HARQ-ACK codebook, and achieves the same technical effects, which are omitted here to avoid repetition. In which, the processor-readable storage medium for example may be a read-only memory (ROM), a random access memory (RAM), a magnetic disk, an optical disk, or the like.

Those skilled in the art will appreciate that an embodiment of the present disclosure may be provided as a method, a system, or a computer program product. Accordingly, the present disclosure may take the form of entirely hardware embodiments, entirely software embodiments, or embodiments combining software and hardware aspects. Moreover, the present disclosure may take the form of a computer program product embodied on one or more computer-usable storage media (including but not limited to a magnetic disk storage, an optical storage, etc.) containing computer-usable program codes.

The present disclosure is described with reference to the flowcharts and/or the block diagrams of the method, the apparatus (system), and the computer program product according to the embodiments of the present disclosure. It should be understood that each flow and/or block in a flowchart and/or a block diagram, and combinations of the flows and/or the blocks in the flowchart and/or the block diagram may be implemented by computer-executable instructions. These computer-executable instructions may be provided to a processor of a general-purpose computer, a special-purpose computer, an embedded processing machine or other programmable data processing device to produce a machine, such that the instructions executed by the processor of the computer or other programmable data processing device create means to realize function(s) specified in one or more flows of the flowchart and/or one or more blocks in the block diagram.

These processor-executable instructions may also be stored in a processor-readable memory capable of guiding the computer or other programmable data processing device to work in a particular way, such that the instructions stored in the processor-readable memory can produce manufacture articles including an instructing device which realizes function(s) specified in one or more flows in the flowchart and/or one or more blocks in the block diagram.

These processor-executable instructions may also be loaded onto a computer or other programmable data processing device, such that a series of operation steps can be performed on the computer or other programmable data processing device to produce a processing realized by the computer, thus the instructions executed on the computer or other programmable device provide step(s) for realizing function(s) specified in one or more flows in the flowchart and/or one or more blocks in the block diagram.

It should be noted that the division of the modules is only a division of logical functions, and in practical implementations, the modules may be entirely or partially integrated into a physical entity, or physically separated. In addition, these modules may all be implemented by calling software with a processing element; or all be implemented in the form of hardware; or some implemented by calling software with a processing element, and some implemented in the form of hardware. For example, a determination module may be a separately disposed processing element, or may be implemented by being integrated in a chip of the apparatus. In addition, the module may also be stored in the form of program codes in a memory of the apparatus, and a processing element of the apparatus calls and executes the function of the determination module. The implementations of other modules are similar. In addition, all or part of these modules may be integrated together or independently implemented. The processing element here may be an integrated circuit with a signal processing capability. During implementations, the steps of the above method or the above modules may be completed by a hardware integrated logical circuit in the processor element or instructions in the form of software.

For example, various modules, units, sub-units, or sub-modules may be one or more integrated circuits configured to implement the above methods, such as one or more application specific integrated circuits (ASICs), or one or more microprocessors (digital signal processors, DSPs), or one or more field programmable gate arrays (FPGAs), etc. For another example, when one of the above modules is implemented by calling program codes with a processing element, the processing element may be a general-purpose processor, such as a central processing unit (CPU) or any other processor capable of calling the program codes. For still another example, these modules may be integrated together and implemented in the form of a system-on-a-chip (SOC).

The terms such as "first" and "second" in the Specification and the claims of the present disclosure are used to distinguish similar objects and are not necessarily to describe a particular order or precedence. It should be understood that the data so used may be interchanged under appropriate circumstances, so that the embodiments of the present disclosure described here, for example, are implemented in an order in addition to those illustrated or described here. Further, the terms "comprise", "include", "have" and any variations thereof, are intended to cover non-exclusive inclusions, e.g., a process, a method, a system, a product, or a device that includes a series of steps or elements is not necessarily limited to the explicitly listed steps or units, but may include other steps or units not expressly listed or inherent to such process, method, product, or device. In addition, the term "and/or" used in the Specification and the claims means at least one of the connected objects. For example, A and/or B and/or C means that there are seven cases, i.e., A exists alone, B exists alone, C exists alone, both A and B exist, both B and C exist, both A and C exist, and A, B and C all exist. Similarly, "at least one of A or B" in the Specification and the claims should be understood as "A exists alone, B exists alone, or both A and B exist".

Obviously, those skilled in the art can make various modifications and variations to the present disclosure without departing from the spirit and the scope of the present disclosure. Thus, when these modifications and variations of the present disclosure fall within the scope of the claims of the present disclosure and the technical equivalents thereof, the present disclosure is also intended to include these modifications and variations.

**Claims**

1. A method for determining a dynamic hybrid automatic repeat request acknowledgement (HARQ-ACK) codebook, wherein the method is performed by a communication device and comprises:

determining dynamic HARQ-ACK codebook information based on a first index;

wherein the first index comprises an index of a cell set or an index of a reference serving cell; and

wherein the cell set comprises at least two serving cells, the reference serving cell correspond to one cell set.

2. The method according to claim 1, wherein the determining the dynamic HARQ-ACK codebook information based on the first index comprises:

determining the first index indicated by scheduling signaling corresponding to a physical downlink control channel (PDCCH) monitoring occasion (MO); and

determining HARQ-ACK codebook information corresponding to the scheduling signaling based on the first index;

wherein the scheduling signaling is used for scheduling at least one cell in the cell set.

3. The method according to claim 2, wherein the determining the HARQ-ACK codebook information corresponding to the scheduling signaling based on the first index comprises:

when a first condition is satisfied, determining the HARQ-ACK codebook information corresponding to the scheduling signaling based on scheduled cells in the cell set indicated by the first index;

wherein the first condition comprises: at least one of the cells scheduled by the scheduling signaling has an HARQ procedure with enabled HARQ-ACK feedback.

4. The method according to claim 2 or 3, wherein the determining the HARQ-ACK codebook information corresponding to the scheduling signaling based on the scheduled cells in the cell set indicated by the first index comprises:

determining the HARQ-ACK codebook information corresponding to the scheduling signaling according to a first order of indexes of the scheduled cells in the cell set indicated by the first index;

wherein the first order comprises an ascending order or a descending order.

5. The method according to claim 4, wherein the determining the HARQ-ACK codebook information corresponding to the scheduling signaling comprises:

determining a quantity of bits of HARQ-ACK corresponding to the scheduled cell according to a parameter configuration of a currently active bandwidth part (BWP) of the scheduled cell;

determining HARQ-ACK feedback information corresponding to the scheduled cell according to the quantity of bits of the HARQ-ACK corresponding to the scheduled cell; and

determining the HARQ-ACK codebook information corresponding to the scheduling signaling according to the HARQ-ACK feedback information corresponding to the scheduled cell.

6. The method according to claim 2 or 3 or 5, wherein a quantity of bits of the HARQ-ACK codebook information corresponding to the scheduling signaling is Y, Y being an integer greater than or equal to 1; the method further comprising:

when a terminal is configured with one cell set, determining a maximum quantity of bits to be fed back corresponding to the cell set that corresponds to the first index indicated by the scheduling signaling as Y; or

when the terminal is configured with at least two cell sets, determining a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

7. The method according to claim 6, further comprising:
when a quantity of bits X of the HARQ-ACK codebook information corresponding to the scheduling signaling is less than Y, padding Y-X sequential values with negative acknowledgement (NACK).

8. The method according to claim 6, wherein a value of Y is determined according to a quantity of scheduled transport blocks (TBs).

9. The method according to claim 3, further comprising:
for a scheduled cell for which data is scheduled and HARQ is disabled, ignoring HARQ-ACK information of the scheduled cell.

10. The method according to claim 3, further comprising:

when the scheduling signaling corresponding to the first index is before a first change, ignoring the HARQ-ACK codebook information of the scheduling signaling in a case where at least a second condition is satisfied; the first change comprises: a change of an active downlink (DL) BWP; wherein the second condition comprises at least one of:

the cell set scheduled by the scheduling signaling is the same as a cell set scheduled by scheduling signaling triggering the first change;
a cell where the first change occurs is one cell in the cell set corresponding to the first index;
the cells scheduled by the scheduling signaling comprise the cell where the first change occurs;
a DL BWP change occurs in all cells of the cell set corresponding to the first index;
the cell where the scheduling signaling is sent is the same as the cell where the first change occurs;
the first change causes a quantity of bits of the HARQ-ACK codebook information corresponding to the scheduling signaling to vary; or
the first change causes a physical downlink shared channel (PDSCH) candidate reception position corresponding to the scheduling signaling to vary.

11. A communication device, the communication device being a terminal or a network device, and comprising a memory, a transceiver and a processor;
wherein the memory is configured to store a computer program; the transceiver is configured to transmit and receive data under the control of the processor; and the processor is configured to read the computer program in the memory and perform the following steps:

determining dynamic hybrid automatic repeat request acknowledgement (HARQ-ACK) codebook information based on a first index;
wherein the first index comprises an index of a cell set or an index of a reference serving cell; and
wherein the cell set comprises at least two serving cells, the reference serving cell correspond to one cell set.

12. The communication device according to claim 11, wherein the processor is configured to read the computer program in the memory and perform the following steps:

determining the first index indicated by scheduling signaling corresponding to a physical downlink control channel (PDCCH) monitoring occasion (MO); and
determining HARQ-ACK codebook information corresponding to the scheduling signaling based on the first index;
wherein the scheduling signaling is used for scheduling at least one cell in the cell set.

13. The communication device according to claim 12, wherein the processor is configured to read the computer program in the memory and perform the following step:

when a first condition is satisfied, determining the HARQ-ACK codebook information corresponding to the scheduling signaling based on scheduled cells in the cell set indicated by the first index;
wherein the first condition comprises: at least one of the cells scheduled by the scheduling signaling has an HARQ procedure with enabled HARQ-ACK feedback.

14. The communication device according to claim 12 or 13, wherein the processor is configured to read the computer program in the memory and perform the following step:

determining the HARQ-ACK codebook information corresponding to the scheduling signaling according to a first order of indexes of the scheduled cells in the cell set indicated by the first index;
wherein the first order comprises an ascending order or a descending order.

15. The communication device according to claim 14, wherein the processor is configured to read the computer program in the memory and perform the following steps:

determining a quantity of bits of HARQ-ACK corresponding to the scheduled cell according to a parameter configuration of a currently active bandwidth part (BWP) of the scheduled cell;

determining HARQ-ACK feedback information corresponding to the scheduled cell according to the quantity of bits of the HARQ-ACK corresponding to the scheduled cell; and

determining the HARQ-ACK codebook information corresponding to the scheduling signaling according to the HARQ-ACK feedback information corresponding to the scheduled cell.

16. The communication device according to claim 12 or 13 or 15, wherein a quantity of bits of the HARQ-ACK codebook information corresponding to the scheduling signaling is Y, Y being an integer greater than or equal to 1; and the processor is configured to read the computer program in the memory and perform the following steps:

when the terminal is configured with one cell set, determining a maximum quantity of bits to be fed back corresponding to the cell set that corresponds to the first index indicated by the scheduling signaling as Y; or when the terminal is configured with at least two cell sets, determining a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

17. The communication device according to claim 16, wherein the processor is configured to read the computer program in the memory and perform the following step:

when a quantity of bits X of the HARQ-ACK codebook information corresponding to the scheduling signaling is less than Y, padding Y-X sequential values with negative acknowledgement (NACK).

18. The communication device according to claim 16, wherein a value of Y is determined according to a quantity of scheduled TBs.

19. The communication device according to claim 13, wherein the processor is configured to read the computer program in the memory and perform the following step:

for a scheduled cell for which data is scheduled and HARQ is disabled, ignoring HARQ-ACK information of the scheduled cell.

20. The communication device according to claim 13, wherein the processor is configured to read the computer program in the memory and perform the following step:

when the scheduling signaling corresponding to the first index is before a first change, ignoring the HARQ-ACK codebook information of the scheduling signaling in a case where at least a second condition is satisfied;

the first change comprises: a change of an active downlink (DL) BWP;

wherein the second condition comprises at least one of:

the cell set scheduled by the scheduling signaling is the same as a cell set scheduled by scheduling signaling triggering the first change;

a cell where the first change occurs is one cell in the cell set corresponding to the first index;

the cells scheduled by the scheduling signaling comprise the cell where the first change occurs;

a DL BWP change occurs in all cells of the cell set corresponding to the first index;

the cell where the scheduling signaling is sent is the same as the cell where the first change occurs;

the first change causes a quantity of bits of the HARQ-ACK codebook information corresponding to the scheduling signaling to vary; or

the first change causes a PDSCH candidate reception position corresponding to the scheduling signaling to vary.

21. An apparatus for determining a dynamic hybrid automatic repeat request acknowledgement (HARQ-ACK) codebook, the apparatus being applied to a terminal or a network device, and comprising:

a first determination unit, configured to determine dynamic HARQ-ACK codebook information based on a first index;

wherein the first index comprises an index of a cell set or an index of a reference serving cell; and

wherein the cell set comprises at least two serving cells, the reference serving cell correspond to one cell set.

22. The apparatus according to claim 21, wherein the first determination unit is specifically configured to:

determine a first index indicated by scheduling signaling corresponding to a physical downlink control channel (PDCCH) monitoring occasion (MO); and

determine HARQ-ACK codebook information corresponding to the scheduling signaling based on the first index; wherein the scheduling signaling is used for scheduling at least one cell in the cell set.

23. The apparatus according to claim 22, wherein the determining the HARQ-ACK codebook information corresponding to the scheduling signaling based on the first index comprises:

when a first condition is satisfied, determining the HARQ-ACK codebook information corresponding to the scheduling signaling based on scheduled cells in the cell set indicated by the first index; wherein the first condition comprises: at least one of the cells scheduled by the scheduling signaling has an HARQ procedure with enabled HARQ-ACK feedback.

24. The apparatus according to claim 22 or 23, wherein the determining the HARQ-ACK codebook information corresponding to the scheduling signaling based on the scheduled cells in the cell set indicated by the first index comprises:

determining the HARQ-ACK codebook information corresponding to the scheduling signaling according to a first order of indexes of the scheduled cells in the cell set indicated by the first index; wherein the first order comprises an ascending order or a descending order.

25. The apparatus according to claim 24, wherein the determining the HARQ-ACK codebook information corresponding to the scheduling signaling comprises:

determining a quantity of bits of HARQ-ACK corresponding to the scheduled cell according to a parameter configuration of a currently active bandwidth part (BWP) of the scheduled cell; determining HARQ-ACK feedback information corresponding to the scheduled cell according to the quantity of bits of the HARQ-ACK corresponding to the scheduled cell; and determining the HARQ-ACK codebook information corresponding to the scheduling signaling according to the HARQ-ACK feedback information corresponding to the scheduled cell.

26. The apparatus according to claim 22 or 23 or 25, wherein a quantity of bits of the HARQ-ACK codebook information corresponding to the scheduling signaling is Y, Y being an integer greater than or equal to 1; the apparatus further comprising:

a second determination unit, configured to, when the terminal is configured with one cell set, determine a maximum quantity of bits to be fed back corresponding to the cell set that corresponds to the first index indicated by the scheduling signaling as Y; or when the terminal is configured with at least two cell sets, determine a maximum quantity of bits to be fed back corresponding to a first cell set as Y, wherein the first cell set is one cell set among the at least two cell sets that corresponds to a maximum value of the maximum quantities of bits to be fed back corresponding to the at least two cell sets.

27. The apparatus according to claim 26, wherein the second determination unit is further configured to: when a quantity of bits X of the HARQ-ACK codebook information corresponding to the scheduling signaling is less than Y, pad Y-X sequential values with negative acknowledgement (NACK).

28. The apparatus according to claim 26, wherein a value of Y is determined according to a quantity of scheduled TBs.

29. The apparatus according to claim 23, wherein the first determination unit is further configured to: for a scheduled cell for which data is scheduled and HARQ is disabled, ignore HARQ-ACK information of the scheduled cell.

30. The apparatus according to claim 23, further comprising:

a performing unit, configured to, when the scheduling signaling corresponding to the first index is before a first change, ignore the HARQ-ACK codebook information of the scheduling signaling in a case where at least a second condition is satisfied;

the first change comprises: a change of an active downlink (DL) BWP;

wherein the second condition comprises at least one of:

the cell set scheduled by the scheduling signaling is the same as a cell set scheduled by scheduling signaling triggering the first change;

a cell where the first change occurs is one cell in the cell set corresponding to the first index;

the cells scheduled by the scheduling signaling comprise the cell where the first change occurs;

a DL BWP change occurs in all cells of the cell set corresponding to the first index;

the cell where the scheduling signaling is sent is the same as the cell where the first change occurs;

the first change causes a quantity of bits of the HARQ-ACK codebook information corresponding to the scheduling signaling to vary; or

the first change causes a PDSCH candidate reception position corresponding to the scheduling signaling to vary.

31. A processor-readable storage medium storing a computer program, wherein the computer program is configured to cause a processor to perform the method according to any one of claims 1 to 10.

Base station

User terminal

Fig. 1

DCI     PUCCH

Indicated PUCCHs
on a same slot

DCI-1   DCI-2   DCI-3   DCI-4   DCI-5   DCI-6   DCI-7

C-DAI 00    01    10    11    00    01    10      6-bit HARQ-ACK feedback

DCI monitoring missed    DCI monitoring missed

Fig. 2

Fig. 3

Fig. 4

Determining dynamic HARQ-ACK
codebook information based on a first index — S501

Fig. 5

Fig. 6

Fig. 7

Fig. 8

Fig. 9

Fig. 10

## INTERNATIONAL SEARCH REPORT

| International application No. |
|---|
| **PCT/CN2024/074436** |

**A. CLASSIFICATION OF SUBJECT MATTER**

H04L 1/1812(2023.01)i

According to International Patent Classification (IPC) or to both national classification and IPC

**B. FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, DWPI, ENTXT, VEN, WPABS, 3GPP: 参考服务小区, 小区集合, 索引, 多小区, 码本, HARQ-ACK, 反馈, BWP, 切换, DCI, 调度, 多个, reference serving cell, cell set, index, multi-cell, codebook, reedback, handover, scheduling, multiple

**C. DOCUMENTS CONSIDERED TO BE RELEVANT**

| Category* | Citation of document, with indication, where appropriate, of the relevant passages | Relevant to claim No. |
|---|---|---|
| X | WO 2022086888 A1 (YI, Y. J. et al.) 28 April 2022 (2022-04-28)<br>description, paragraphs 0299-0319 | 1-31 |
| Y | WO 2022086888 A1 (YI, Y. J. et al.) 28 April 2022 (2022-04-28)<br>description, paragraphs 0299-0319 | 1-31 |
| Y | CN 113676292 A (VIVO COMMUNICATION TECHNOLOGY CO., LTD.) 19 November 2021 (2021-11-19)<br>description, paragraphs 0157-0179 | 1-31 |
| A | WO 2022029295 A1 (TELEFONAKTIEBOLAGET LM ERICSSON (PUBL)) 10 February 2022 (2022-02-10)<br>entire document | 1-31 |
| A | WO 2022152326 A1 (BEIJING UNISOC COMMUNICATION TECHNOLOGY CO., LTD.) 21 July 2022 (2022-07-21)<br>entire document | 1-31 |
| A | WO 2022217606 A1 (NEC CORP.) 20 October 2022 (2022-10-20)<br>entire document | 1-31 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/074436**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022246825 A1 (GUANGDONG OPPO MOBILE COMMUNICATIONS CO., LTD.) 01 December 2022 (2022-12-01)<br>entire document | 1-31 |

Form PCT/ISA/210 (second sheet) (July 2022)

International application No.

**PCT/CN2024/074436**

| Patent document cited in search report | | | Publication date (day/month/year) | Patent family member(s) | | | Publication date (day/month/year) |
|---|---|---|---|---|---|---|---|
| WO | 2022086888 | A1 | 28 April 2022 | EP | 4229794 | A1 | 23 August 2023 |
| | | | | US | 2024057108 | A1 | 15 February 2024 |
| | | | | CN | 116711251 | A | 05 September 2023 |
| CN | 113676292 | A | 19 November 2021 | WO | 2021228080 | A1 | 18 November 2021 |
| | | | | KR | 20230002759 | A | 05 January 2023 |
| | | | | EP | 4138323 | A1 | 22 February 2023 |
| | | | | US | 2023075353 | A1 | 09 March 2023 |
| WO | 2022029295 | A1 | 10 February 2022 | EP | 4193522 | A1 | 14 June 2023 |
| | | | | US | 2023291509 | A1 | 14 September 2023 |
| | | | | CN | 116325590 | A | 23 June 2023 |
| WO | 2022152326 | A1 | 21 July 2022 | CN | 114765484 | A | 19 July 2022 |
| WO | 2022217606 | A1 | 20 October 2022 | CN | 117413602 | A | 16 January 2024 |
| WO | 2022246825 | A1 | 01 December 2022 | CN | 116964973 | A | 27 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310144468